# EUROPEAN PATENT SPECIFICATION

(11) **EP 2 916 160 B1**
(45) Date of publication and mention of the grant of the patent: **27.05.2020**
(21) Application number: 13851953.3
(22) Date of filing: 24.07.2013
(51) Int. Cl.: G02B 21/36, G02B 7/28, G02B 7/36, G02B 21/18, H04N 5/225, H04N 5/232, G02B 21/24, G02B 21/26, H04N 5/222

(54) **IMAGE ACQUISITION DEVICE AND METHOD FOR FOCUSING IMAGE ACQUISITION DEVICE**
BILDERFASSUNGSVORRICHTUNG UND VERFAHREN ZUR FOKUSSIERUNG EINER BILDERFASSUNGSVORRICHTUNG
DISPOSITIF D'ACQUISITION D'IMAGES ET PROCÉDÉ DE MISE AU POINT POUR DISPOSITIF D'ACQUISITION D'IMAGES

(30) Priority: 31.10.2012 JP 2012240494
(43) Date of publication of application: 09.09.2015
(73) Proprietor: Hamamatsu Photonics K.K., Hamamatsu-shi, Shizuoka 435-8558 (JP)
(72) Inventor: OKUGAWA Masatoshi, Hamamatsu-shi, Shizuoka 435-8558 (JP); SUSUKI Jinichi, Hamamatsu-shi, Shizuoka 435-8558 (JP); OISHI Hideshi, Hamamatsu-shi, Shizuoka 435-8558 (JP)
(74) Representative: Hoffmann Eitle
(86) International application number: PCT/JP2013/070051
(87) International publication number: WO 2014/069053

(56) References cited:
- JP-A- 2004 514 920
- JP-A- 2005 202 092
- JP-A- 2006 189 510
- JP-A- 2011 081 211
- JP-A- 2011 085 652
- US-A1- 2005 089 208
- US-A1- 2009 195 688

## Description

### Technical Field

The present invention relates to an image capturing apparatus used for acquisition of an image of a sample or the like, and a method for focusing the same.

### Background Art

US 2005/089208 A1 discloses a system and a method for obtaining images of a microscope slide. According to this document, a focus camera includes an optical sensor that is tilted relative to the focal plane of a scanning camera.

As an image capturing apparatus there is a virtual microscope device, for example, configured to preliminarily divide an imaging region of a sample into a plurality of regions, capture images of the respective segmented regions at a high magnification, and thereafter synthesize these images. The conventional image capturing with such a virtual microscope is carried out as follows: a focus map for an entire region of the sample as an object is set as an imaging condition in capturing images of the sample such as a biological sample, and the image capturing of the sample is carried out while performing focus control based on the focus map.

For creation of the focus map, a macro image of the entire sample is first captured with use of an image capturing apparatus having a macro optical system. Next, an imaging range of the sample is set using the captured macro image, the imaging range is divided into a plurality of segmented regions, and focus acquisition positions are set for the respective segmented regions. After the focus acquisition positions are set, the sample is transferred to an image capturing apparatus having a micro optical system, focus positions are captured at the set focus acquisition positions, and the focus map is created from these focus positions.

However, there was a problem that the creation of the focus map as described above needed some time for processing. The time necessary for processing can be reduced by decreasing the interval and number of focuses to be acquired, but in that case there arose another problem of reduction in focus accuracy. For this reason, development of dynamic focus has been advanced to capture high-magnification images of the sample while acquiring the focus positions. This method is a method of detecting a deviation direction of a focus position with respect to a current height of an objective lens, based on a light intensity difference or contrast difference between an optical image which is focused at the front of an optical image made incident into an imaging device for capturing an image (front focus) and an optical image which is focused at the rear thereof (rear focus), moving the objective lens in a direction to cancel the deviation, and then capturing an image.

For example, the microscope system described in Patent Literature 1 is provided with second imaging unit for imaging a region ahead of a region imaged by first imaging unit; auto-focus control unit for adjusting an in-focus position of the objective lens at the imaging position by the first imaging unit, based on an image captured by the second imaging unit; and timing control unit for matching the timing of movement of a segmented region from the imaging position of the second imaging unit to the imaging position of the first imaging unit with the timing of locating at an imaging area of the first imaging unit an image formation position of the segmented region imaged by the second imaging unit, according to the distance between segmented regions and the moving speed of the sample.

### Citation List

### Patent Literature

Patent Literature 1: Japanese Patent Application Laid-open Publication No. 2011-081211

### Summary of Invention

### Technical Problem

Here, in the case where, in each segmented region, imaging of the segmented region is implemented with adjustment of focus position while the imaging position is moved at a predetermined speed by the dynamic focus method as described above, it is necessary to perform a process (pre-focus) of preliminarily moving the objective lens to the vicinity of the in-focus position, at a scanning position where the sample as an imaging object first appears in each segmented region. The reason for it is that if the position of the objective lens has a significant deviation from the vicinity of the in-focus position at the scanning position where the sample first appears, there is a risk of divergence of the control of focus position by the dynamic focus.

However, if the execution of the pre-focus takes some time, there will arise a problem of increase in processing time necessary for imaging due to the execution of each pre-focus operation, particularly, in a case where the imaging range is divided into a large number of segmented regions.

The present invention has been accomplished in order to solve the above problem and it is an object of the present invention to provide an image capturing apparatus and a focusing method therefor capable of suppressing the increase in processing time necessary for imaging, by simplification of the pre-focus.

### Solution to Problem

The problem of the invention is solved by the subject matter of the independent claims. Advantageous embodiments are disclosed in the dependent claims.

In order to solve the above problem, an image capturing apparatus according to an example comprises: a stage on which a sample is placed; a light source which radiates light to the sample; a light guiding optical system including a light dividing unit which divides an optical image of the sample into a first optical path for capturing an image and a second optical path for focus control; a first imaging unit which captures a first image by a first optical image divided into the first optical path; a second imaging unit which captures a second image by a second optical image divided into the second optical path; a scan control unit which implements scanning along a plurality of preset segmented regions with an imaging position of the sample by the first imaging unit and the second imaging unit; and a focus control unit which analyzes the second image so as to control a focus position of the image pickup by the first imaging unit based on the analysis result, wherein the focus control unit stores the control result of the focus position while the scan control unit scans the segmented regions, and the focus control unit determines an initial focus position for the scan control unit to scan the (n+1)th segmented region, based on the control result stored while the scan control unit scans the nth (n is an integer of 1 or more) or earlier segmented region.

This image capturing apparatus is configured to store the control result of the focus position during the scanning of the segmented regions and determine the initial focus position in the scanning of the (n+1)th segmented region, based on the control result stored during the scanning of the nth (n is an integer of 1 or more) or earlier segmented region. The foregoing technique allows this image capturing apparatus to roughly determine the initial focus position in the next-scanned segmented region by making use of the control result of the segmented region the scanning of which has been already completed. This can suppress the increase in processing time necessary for imaging, by simplification of the pre-focus.

The focus control unit may determine the initial focus position for the scan control unit to scan the (n+1)th segmented region, based on the control result stored during the scanning of the segmented region adjacent to the (n+1)th segmented region. It is normally presumed that the thickness of a sample continuously varies between neighboring segmented regions. Therefore, the initial focus position can be more accurately determined by use of the control result of the focus position in an adjacent segmented region.

The focus control unit may determine the initial focus position for the scan control unit to scan the (n+1)th segmented region, based on the control results stored during the scanning of a plurality of segmented regions before the (n+1)th segmented region. The initial focus position can be more accurately determined by use of the control results of the focus position in a plurality of segmented regions.

Preferably, the image capturing apparatus further comprises: region control unit which sets at an imaging area of the second imaging unit a first imaging region and a second imaging region for capturing a partial image of the second optical image; and an optical-path-difference producing member which is disposed on the second optical path and giving an optical path difference to the second optical image along an in-plane direction of the imaging area, and the focus control unit stores the control result of the focus position at a scanning position where an absolute value of a difference between a contrast value of an image captured in the first imaging region and a contrast value of an image captured in the second imaging region is not more than a predetermined value. This allows the apparatus to select and store the control result of the focus position present in the vicinity of an in-focus position and thereby to more accurately determine the initial focus position.

Preferably, the image capturing apparatus further comprises: a macro image capturing unit which captures a macro image including the entire sample, and the focus control unit stores the control result of the focus position in a period in which the scan control unit scans a region where the sample exists, based on the macro image. This can eliminate the control result of the focus position in the region where the sample is absent, and more accurately determine the initial focus position.

The image capturing apparatus my further comprise: a macro image capturing unit which captures a macro image including the entire sample, and the scan control unit scans a segmented region where a region occupied by the sample is maximum as the first segmented region based on the macro image. In this case, the control results of more focus positions can be stored during the scanning of the first segmented region than during the scanning of the other segmented regions. This allows the apparatus to more accurately determine the initial focus position in the scanning of the subsequent segmented regions.

A focusing method of an image capturing apparatus according to an example is a focusing method of an image capturing apparatus comprising: a stage on which a sample is placed; a light source which radiates light to the sample; a light guiding optical system including a light dividing unit which divides an optical image of the sample into a first optical path for capturing an image and a second optical path for focus control; a first imaging unit which captures a first image by a first optical image divided into the first optical path; a second imaging unit which captures a second image by a second optical image divided into the second optical path; a scan control unit which implements scanning along a plurality of preset segmented regions with an imaging position of the sample by the first imaging unit and the second imaging unit; and a focus control unit which analyses the second image so as to control a focus position of the image pickup by the first imaging unit based on the analysis result, the method comprising: storing the control result of the focus position while the scan control unit scans the segmented regions; and determining an initial focus position for the scan control unit to scan the (n+1)th segmented region, based on the control result stored while the scan control unit scans the nth (n is an integer of 1 or more) or earlier segmented region.

This focusing method comprises: storing the control result of the focus position during the scanning of the segmented regions; and determining the initial focus position in the scanning of the (n+1)th segmented region, based on the control result stored during the scanning of the nth (n is an integer of 1 or more) or earlier segmented region. The foregoing technique allows this image capturing apparatus to roughly determine the initial focus position in the next-scanned segmented region by making use of the control result of the segmented region the scanning of which has been already completed. This can suppress the increase in processing time necessary for imaging, by simplification of the pre-focus.

The initial focus position for the scan control unit to scan the (n+1)th segmented region may be determined based on the control result stored during the scanning of the segmented region adjacent to the (n+1)th segmented region. It is normally presumed that the thickness of a sample continuously varies between neighboring segmented regions. Therefore, the initial focus position can be more accurately determined by use of the control result of the focus position in an adjacent segmented region.

The initial focus position for the scan control unit to scan the (n+1)th segmented region may be determined based on the control results stored during the scanning of a plurality of segmented regions before the (n+1)th segmented region. The initial focus position can be more accurately determined by use of the control results of the focus position in a plurality of segmented regions.

Preferably, the image capturing apparatus further comprises: region control unit which sets at an imaging area of the second imaging unit a first imaging region and a second imaging region for capturing a partial image of the second optical image; and an optical-path-difference producing member which is disposed on the second optical path and giving an optical path difference to the second optical image along an in-plane direction of the imaging area, and the control result of the focus position is stored at a scanning position where an absolute value of a difference between a contrast value of an image captured in the first imaging region and a contrast value of an image captured in the second imaging region is not more than a predetermined value. This allows the apparatus to select and store the control result of the focus position present in the vicinity of the in-focus position and thereby to more accurately determine the initial focus position.

Preferably, the image capturing apparatus further comprises a macro image capturing unit which captures a macro image including the entire sample, and the control result of the focus position is stored in a period in which the scan control unit scans a region where the sample exists, based on the macro image. This can eliminate the control result of the focus position in the region where the sample is absent, and more accurately determine the initial focus position.

The image capturing apparatus may further comprise a macro image capturing unit which captures a macro image including the entire sample, and the scan control unit may scan a segmented region where a region occupied by the sample is maximum as the first segmented region. In this case, the control results of more focus positions can be stored during the scanning of the first segmented region than during the scanning of the other segmented regions. This allows the apparatus to more accurately determine the initial focus position in the scanning of the subsequent segmented regions.

### Advantageous Effect of Invention

The present invention enables the increase in processing time necessary for imaging to be suppressed by simplification of the pre-focus.

### Brief Description of Drawings

Fig. 1 is a drawing showing one embodiment of a macro image capturing device which constitutes an image capturing apparatus according to the present invention.
Fig. 2 is a drawing showing one embodiment of a micro image capturing device which constitutes the image capturing apparatus according to the present invention.
Fig. 3 is a drawing showing a second imaging device.
Fig. 4 is a drawing showing an example of a combination of an optical-path-difference producing member and the second imaging device.
Fig. 5 is a block diagram showing functional components of the image capturing apparatus.
Fig. 6 is a drawing showing an analysis result of contrast values in a situation where a distance to the surface of a sample is coincident with the focal length of an objective lens.
Fig. 7 is a drawing showing an analysis result of contrast values in a situation where a distance to the surface of the sample is longer than the focal length of the objective lens.
Fig. 8 is a drawing showing an analysis result of contrast values in a situation where a distance to the surface of the sample is shorter than the focal length of the objective lens.
Fig. 9 is a drawing showing a relationship of the distance between the objective lens and the stage with respect to scanning time of the stage.
Fig. 10 is a drawing showing control of a scanning direction of the stage by a stage control portion.
Fig. 11 is a drawing showing control of a scanning speed of the stage by the stage control portion.
Fig. 12 is a drawing showing sample start positions in respective segmented regions.
Fig. 13 is a drawing showing an example of the focus control results stored by a focus control portion.
Fig. 14 is a drawing showing a scanning order of segmented regions in the image capturing apparatus according to a modification example.
Fig. 15 is a flowchart showing an operation of the image capturing apparatus.
Fig. 16 is a flowchart showing a capturing operation of micro images by the micro image capturing device.

### Description of Embodiments

Preferred embodiments of the image capturing apparatus and the focusing method of the image capturing apparatus according to the present invention will be described below in detail with reference to the drawings.

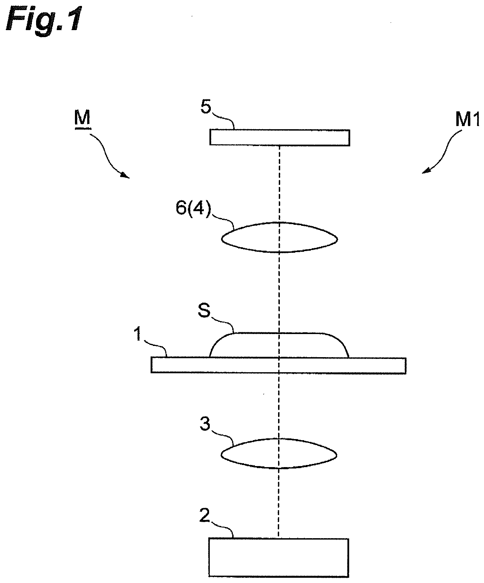

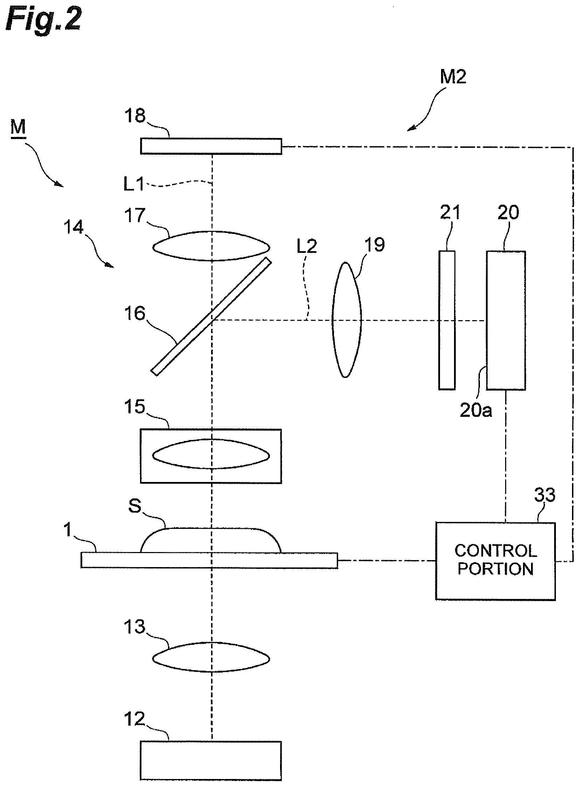

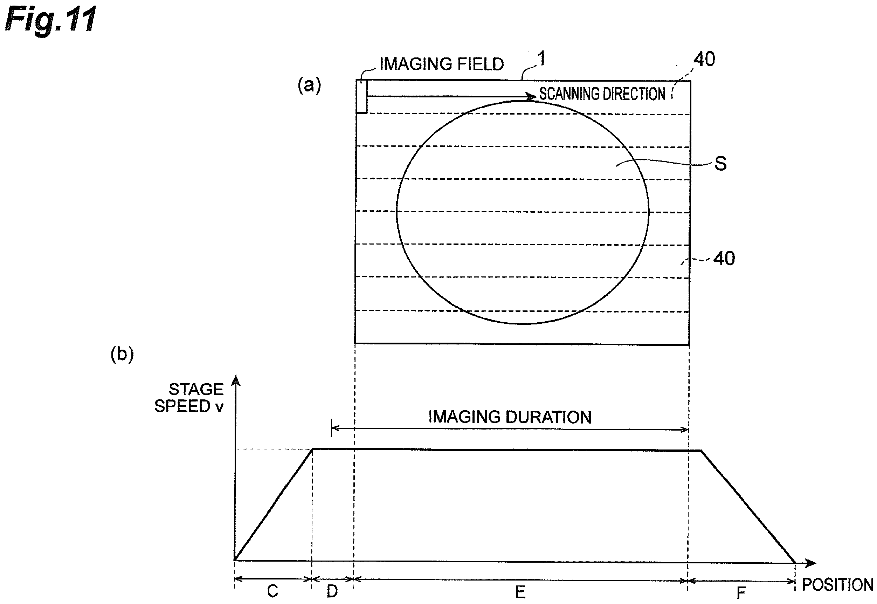

Fig. 1 is a drawing which shows one embodiment of the macro image capturing device which constitutes the image capturing apparatus of the present invention. Fig. 2 is a drawing which shows one embodiment of the micro image capturing device which constitutes the image capturing apparatus of the present invention. As shown in Fig. 1 and Fig. 2, an image capturing apparatus M is constituted with a macro image capturing device M1 for capturing a macro image of a sample S and a micro image capturing device M2 for capturing a micro image of the sample S. The image capturing apparatus M is an apparatus which sets, for example, a plurality of line-shaped divided regions 40 with respect to the macro image captured by the macro image capturing device M1 (refer to Fig. 11) and produces a virtual micro image by capturing and synthesizing each of the divided regions 40 by the micro image capturing device M2 at a high magnification.

As shown in Fig. 1, the macro image capturing device M1 is provided with a stage 1 which supports the sample S. The stage 1 is an XY stage which is actuated in a horizontal direction by a motor or an actuator such as a stepping motor (pulse motor) or a piezo actuator, for example. The sample S which is observed by using the image capturing apparatus M is, for example, a biological sample such as cells and placed on the stage 1 in a state of being sealed on a slide glass. The stage 1 is actuated inside the XY plane, by which an imaging position with respect to the sample S is allowed to move.

The stage 1 is able to move back and forth between the macro image capturing device M1 and the micro image capturing device M2 and provided with functions to deliver the sample S between the devices. It is acceptable that when a macro image is captured, an entire image of the sample S is picked up at one time or the sample S is divided into a plurality of regions to pick up each of the images. It is also acceptable that the stage 1 is installed both on the macro image capturing device M1 and on the micro image capturing device M2.

A light source 2 which radiates light to the sample S and a condensing lens 3 which concentrates light from the light source 2 at the sample S are disposed on a bottom of the stage 1. It is acceptable that the light source 2 is disposed so as to radiate light obliquely to the sample S. Further, a light guiding optical system 4 which guides an optical image from the sample S and an imaging device 5 which images the optical image of the sample S are disposed on an upper face of the stage 1. The light guiding optical system 4 is provided with an image forming lens 6 which forms the optical image from the sample S at an imaging area of the imaging device 5. Still further, the imaging device 5 is an area sensor which is capable of capturing, for example, a two-dimensional image. The imaging device 5 captures an entire image of the optical image of the sample S made incident into the imaging area via the light guiding optical system 4 and is housed at a virtual micro image storage 39 to be described later.

As shown in Fig. 2, the micro image capturing device M2 is provided on the bottom of the stage 1 with a light source 12 and a condensing lens 13, as with the macro image capturing device M1. Further, a light guiding optical system 14 which guides an optical image from the sample S is disposed on the upper face of the stage 1. The optical system which radiates light from the light source 12 to the samples may include an excitation light radiating optical system which radiates excitation light to the sample S and a dark-field illuminating optical system which captures a dark-field image of the sample S.

The light guiding optical system 4 is provided with an objective lens 15 disposed so as to face to the sample S and a beam splitter (light dividing unit) 16 disposed at a rear stage of the objective lens 15. The objective lens 15 is provided with a motor and an actuator such as a stepping motor (pulse motor) or a piezo actuator for actuating the objective lens 15 in a Z direction orthogonal to a face on which the stage 1 is placed. A position of the objective lens 15 in the Z direction is changed by these actuation units, thus making it possible to adjust a focus position of image pickup when an image of the sample S is captured. It is acceptable that the focus position is adjusted by changing a position of the stage 1 in the Z direction or by changing positions of both the objective lens 15 and the stage 1 in the Z direction.

The beam splitter 16 is a portion which divides an optical image of the sample S into a first optical path L1 for capturing an image and a second optical path L2 for focus control. The beam splitter 16 is disposed at an angle of approximately 45 degrees with respect to an optical axis from the light source 12. In Fig. 2, an optical path passing through the beam splitter 16 is given as the first optical path L1, while an optical path reflected at the beam splitter 16 is given as the second optical path.

On the first optical path L1, there are disposed an image forming lens 17 which forms the optical image of the sample S (first optical image) which has passed through the beam splitter 16 and a first imaging device (first imaging unit) 18 in which an imaging area is disposed at an image forming position of the image forming lens 17. The first imaging device 18 is a device which is capable of capturing a one-dimensional image (first image) by the first optical image of the sample S and the first imaging device 18 to be used is, for example, a two-dimension CCD sensor or a line sensor capable of realizing TDI (time delay integration) actuation. Further, in a method which captures images of the sample S sequentially, with the stage 1 controlled at a constant speed, the first imaging device 18 may be a device which is capable of capturing a two-dimensional image such as a CMOS sensor or a CCD sensor. First images picked up by the first imaging device 18 are sequentially stored in a temporary storage memory such as a lane buffer, thereafter, compressed and output at an image producing portion 38 to be described later.

On the other hand, on the second optical path L2, there are disposed a view-field adjusting lens 19 which contracts an optical image of a sample reflected by the beam splitter 16 (second optical image) and a second imaging device (second imaging unit) 20. Further, at a front stage of the second imaging device 20, there is disposed an optical path difference producing member 21 which gives an optical path difference to the second optical image. It is preferable that the view-field adjusting lens 19 is constituted in such a manner that the second optical image is formed at the second imaging device 20 in a dimension similar to that of the first optical image.

The second imaging device 20 is a device which is capable of capturing a two-dimensional image (second image) by the second optical image of the sample S and the second imaging device 20 to be used is, for example, a sensor such as a CMOS (complementary metal oxide semiconductor) or a CCD (charge coupled device). Furthermore, a line sensor may be used.

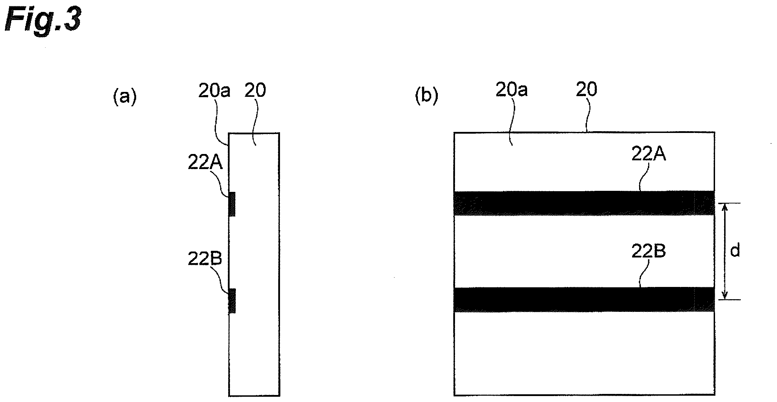

An imaging area 20a of the second imaging device 20 is disposed so as to be substantially in alignment with an XZ plane orthogonal to the second optical path L2. As shown in Fig. 3, a first imaging region 22A and a second imaging region 22B which capture a partial image of the second optical image are set on the imaging area 20a. The first imaging region 22A and the second imaging region 22B are set in a direction perpendicular to a direction (scanning direction: Z direction) at which the second optical image moves on the imaging area 20a in association with scanning of the sample S. The first imaging region 22A and the second imaging region 22B are set, with a predetermined interval kept, and both of them capture a part of the second optical image in a line shape. Thereby, an optical image at the same region as that of the first optical image of the sample S captured by the first imaging device 18 can be captured as the second optical image at the first imaging region 22A and the second imaging region 22B. It is acceptable that each of the first imaging region 22A and the second imaging region 22B is set by using a separate line sensor. In this case, each of the line sensors is controlled separately, thus making it possible to shorten the time necessary for setting the first imaging region 22A and the second imaging region 22B.

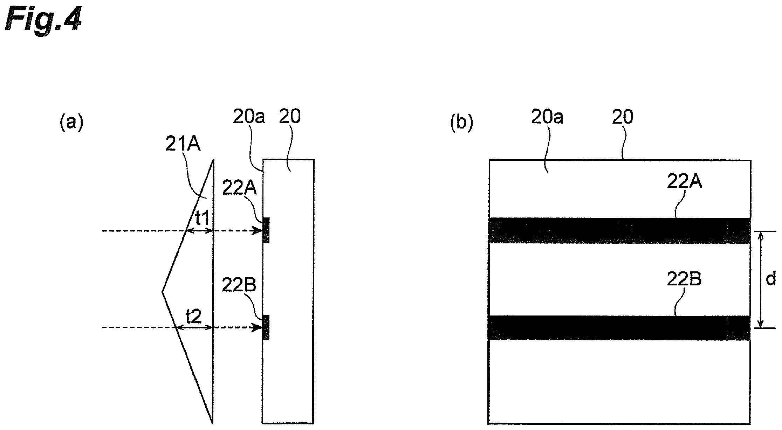

The optical path difference producing member 21 is a glass member which gives an optical path difference to the second optical image along an in-plane direction of the imaging area 20a. In an example shown in Fig. 4, the optical path difference producing member 21A is formed in the shape of a prism having a triangular cross section and disposed in such a manner that an apex thereof is substantially in alignment with a central part of the imaging area 20a in the Z direction. Therefore, the second optical image which is made incident into the imaging area 20a is longest in optical path at the central part of the imaging area 20a in the Z direction and becomes shorter in optical path when moving toward both ends of the imaging area 20a in the Z direction. Further, it is preferable that the optical path difference producing member 21 is disposed in such a manner that a face which faces to the second imaging device 20 is parallel with the imaging area (light receiving face) 20a of the second imaging device. Thereby, it is possible to reduce deflection of light by the face which faces to the second imaging device 20 and also to secure the amount of light which is received by the second imaging device 20.

Accordingly, the second imaging device 20 is able to capture an optical image which is focused at the front of a first optical image made incident into the first imaging device 18 (front focus) and an optical image which is focused at the rear thereof (rear focus) based on a position of the first imaging region 22A and that of the second imaging region 22B. In the present embodiment, the position of the first imaging region 22A and that of the second imaging region 22B are set in such a manner that, for example, the first imaging region 22A is given as the front focus and the second imaging region 22B is given as the rear focus. A focus difference between the front focus and the rear focus is dependent on a difference between a thickness t1 and an index of refraction of the optical path difference producing member 21A through which the second optical image made incident into the first imaging region 22A passes, and a thickness t2 and an index of refraction of the optical path difference producing member 21A through which the second optical image made incident into the second imaging region 22B passes.

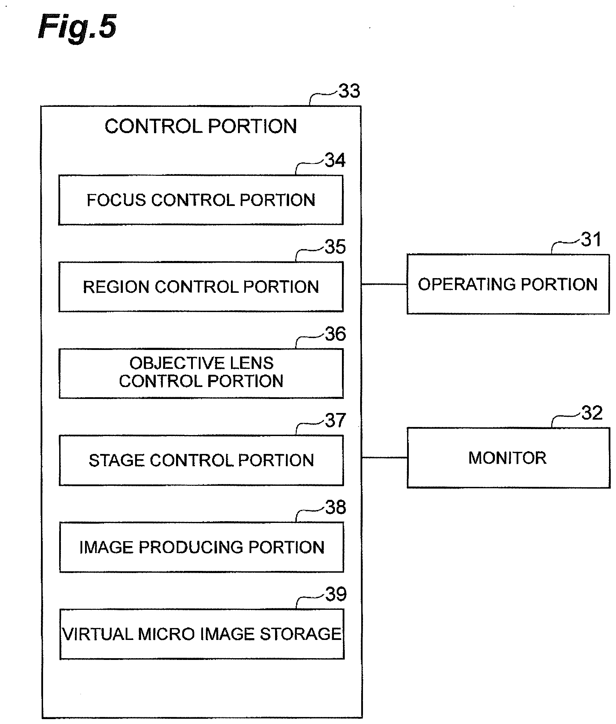

Fig. 5 is a block diagram which shows functional components of the image capturing apparatus. As shown in the diagram, the image capturing apparatus M is provided with a computer system having a CPU, a memory, a communication interface, a storage such as a hard disk, an operation portion 31 such as a keyboard, a monitor 32 etc. The functional components of the control portion 33 include a focus control portion 34, a region control portion 35, an objective lens control portion 36, a stage control portion 37 (scan control unit), an image producing portion 38, and a virtual micro image storage 39.

The focus control portion 34 is a portion which analyzes a second image captured by the second imaging device 20 so as to control a focus position of an image picked up by the first imaging device 18 based on the analysis result More specifically, the focus control portion 34 first determines a difference between a contrast value of the image obtained at the first imaging region 22A and a contrast value obtained at the second imaging region 22B in the second imaging device 20.

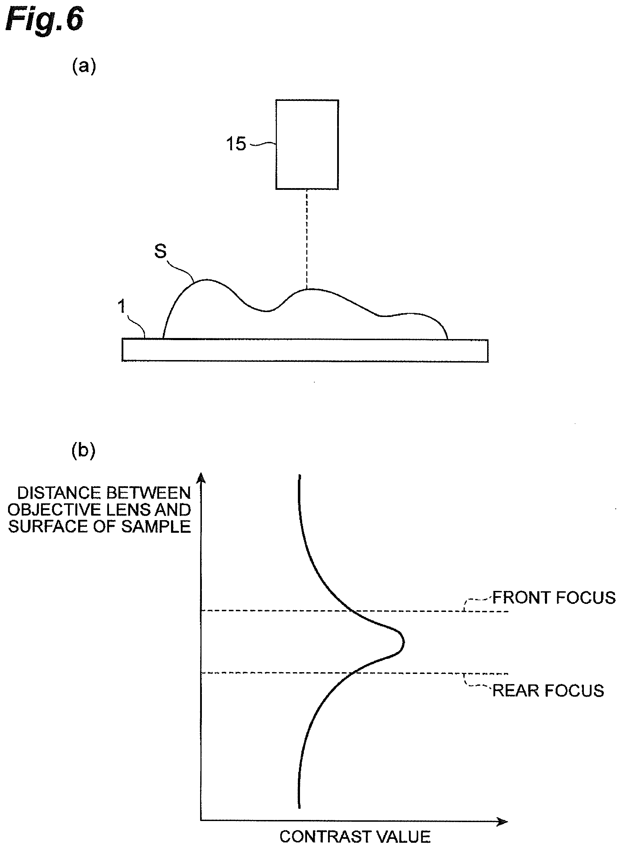

Here, as shown in Fig. 6, where a focus position of the objective lens 15 is in alignment with the surface of the sample S, an image contrast value of the front focus obtained at the first imaging region 22A is substantially in agreement with an image contrast value of the rear focus obtained at the second imaging region 22B. Thereby, a difference value between them is almost zero.

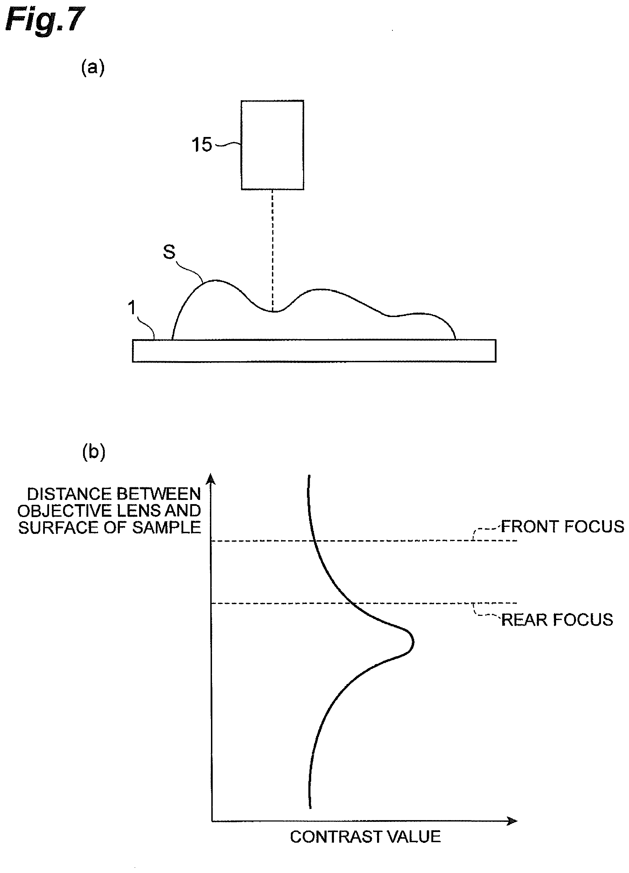

On the other hand, as shown in Fig. 7, where a distance to the surface of the sample S is longer than a focal length of the objective lens 15, an image contrast value of the rear focus obtained at the second imaging region 22B is greater than an image contrast value of the front focus obtained at the first imaging region 22A. Therefore, a difference value between them is a positive value. In this case, the focus control portion 34 outputs instruction information to the objective lens control portion 36 so as to be actuated in a direction at which the objective lens 15 is brought closer to the sample S.

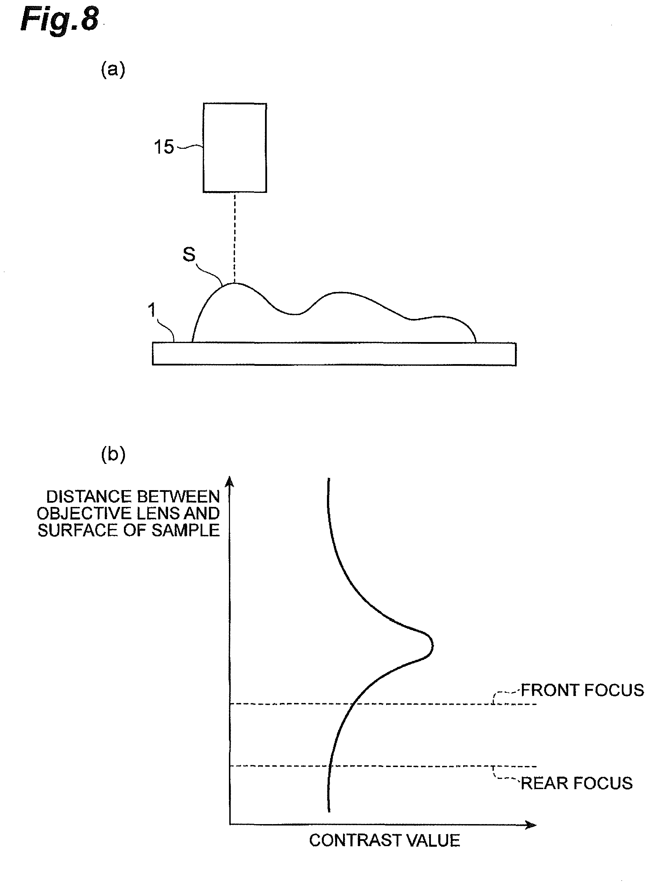

Further, as shown in Fig. 8, where a distance to the surface of the samples is shorter than a focal length of the objective lens 15, an image contrast value of the rear focus obtained at the second imaging region 22B is smaller than an image contrast value of the front focus obtained at the first imaging region 22A. Therefore, a difference value between them is a negative value. In this case, the focus control portion 34 outputs instruction information to the objective lens control portion 36 so as to be actuated in a direction at which the objective lens 15 is brought away from the sample S.

The region control portion 35 is a portion which controls a position of the first imaging region 22A and a position of the second imaging region 22B at the imaging area 20a of the second imaging device 20. The region control portion 35 sets at first the first imaging region 22A at a predetermined position based on operation from the operation portion 31 and releases the setting of the first imaging region 22A after image pickup at the first imaging region 22A. Then, the region control portion 35 sets the second imaging region 22B, with a predetermined interval kept in the Z direction (scanning direction) from the first imaging region 22A, and releases the setting of the second imaging region 22B after image pickup at the second imaging region 22B.

Further, the region control portion 35 is able to change at least one of a position of the first imaging region 22A and that of the second imaging region 22B along an in-plane scanning direction (here, the Z direction) of the imaging area 20a based on operation from the operation portion 31. In this case, it is acceptable to change only one of the position of the first imaging region 22A and that of the second imaging region 22B or both of the position of the first imaging region 22A and that of the second imaging region 22B. It is also acceptable to change both of the position of the first imaging region 22A and that of the second imaging region 22B, with the interval d between the first imaging region 22A and the second imaging region 22B being kept.

The first imaging region 22A and the second imaging region 22B are changed in position, by which, for example, use of a prism-like optical path difference producing member 21A as shown in Fig. 4 makes it possible to change the thickness t1 of the optical path difference producing member 21A through which the second optical image made incident into the first imaging region 22A passes and the thickness t2 of the optical path difference producing member 21A through which the second optical image made incident into the second imaging region 22B passes. Thereby, an interval between the front focus and the rear focus is changed, thus making it possible to adjust resolution on determination of a difference in contrast value.

The objective lens control portion 36 is a portion which controls actuation of the objective lens 15. Upon receiving instruction information output from the focus control portion 34, the objective lens control portion 36 actuates the objective lens 15 in the Z direction in accordance with contents of the instruction information. It is, thereby, possible to adjust a focus position of the objective lens 15 with respect to the sample S.

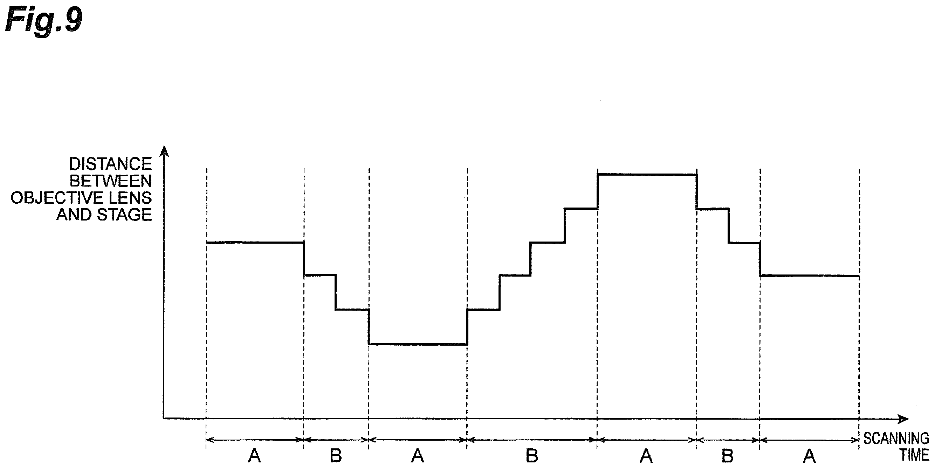

The objective lens control portion 36 does not actuate the objective lens 15 during analysis of the focus position which is being performed by the focus control portion 34 and actuates the objective lens 15 only in one direction along the Z direction until the next analysis of focus position is initiated. Fig. 9 is a drawing which shows a relationship of the distance between the objective lens and the stage 1 with respect to scanning time of the stage. As shown in the drawing, during scanning of the sample S, an analysis period A of the focus position and an objective lens actuation period B based on an analysis result thereof are taken place alternately. By keeping the positional relationship between the objective lens 15 and the sample S unchanged during the analysis of focus position in this manner, analysis accuracy of focus position can be guaranteed.

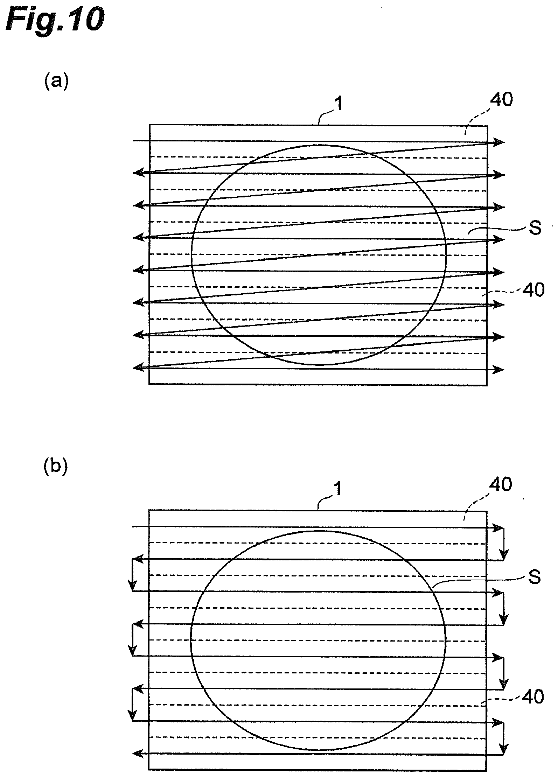

The stage control portion 37 is a portion which controls actuation of the stage 1. More specifically, the stage control portion 37 allows the stage 1 on which the sample S is placed to scan at a predetermined speed based on operation from the operation portion 31. By the scanning of the stage 1, an imaging field of the sample S moves relatively and sequentially at the first imaging device 18 and the second imaging device 20. The scanning direction of the stage 1 may be determined to be one-directional scanning, as shown in (a) of Fig. 10, which is carried out in such a manner that the position of the stage 1 is returned to a scan start position every completion of scanning of one segmented region 40 and the next segmented region 40 is then scanned in the same direction, or may be determined to be bidirectional scanning, as shown in (b) of Fig. 10, which is carried out in such a manner that, after completion of scanning of one segmented region 40, the stage 1 is moved in a direction perpendicular to the scanning direction and the next segmented region 40 is then scanned in the opposite direction. In this manner, the stage control portion 37 scans along the segmented regions 40 with the imaging field (imaging position) of the sample S by the first imaging device 18 and the second imaging device.

Although the stage 1 is scanned at a constant speed while images are captured, actually, immediately after the start of scanning, there is a period during which the scanning speed is unstable due to influences of vibrations of the stage 1 etc. For this reason, it is preferable, as shown in Fig. 11, to set a scanning width longer than the segmented regions 40 and make each of an acceleration period C for the stage 1 to accelerate, a stabilization period D for the scanning speed of the stage 1 to stabilize, and a deceleration period F for the stage 1 to decelerate, occur during scanning outside the segmented regions 40. This allows capturing of images to be carried out in accord with a constant speed period E where the scanning speed of the stage 1 is constant. It is also possible to adopt a technique of starting imaging in the stabilization period D and deleting data part obtained in the stabilization period D after the image has been captured. Such a technique can be suitably applied to cases using an imaging device which requires void reading of data.

The image producing portion 38 is a portion at which an captured image is synthesized to produce a virtual micro image. The image producing portion 38 receives sequentially first images output from the first imaging device 18, that is, images of individual divided regions 40, synthesizing these images to produce an entire image of the sample S. Then, based on the synthesized image, prepared is an image, the resolution of which is lower than that of the synthesized image, and housed in a virtual micro image storage 39 by associating a high resolution image with a low resolution image. It is acceptable that an image captured by the macro image capturing device M1 is also associated with them in the virtual micro image storage 39. The virtual micro image may be stored as a single image or may be stored as a plurality of divided images.

Next, the pre-focus function of the image capturing apparatus M will be described. The pre-focus function is a function to preliminarily move the objective lens 15 to the vicinity of an in-focus position (position where the objective lens 15 is in focus with the surface of the sample S), at a scanning position where the sample S first appears in each segmented region 40 (sample start position). In the image capturing apparatus M, the focus control portion 34 executes the pre-focus process.

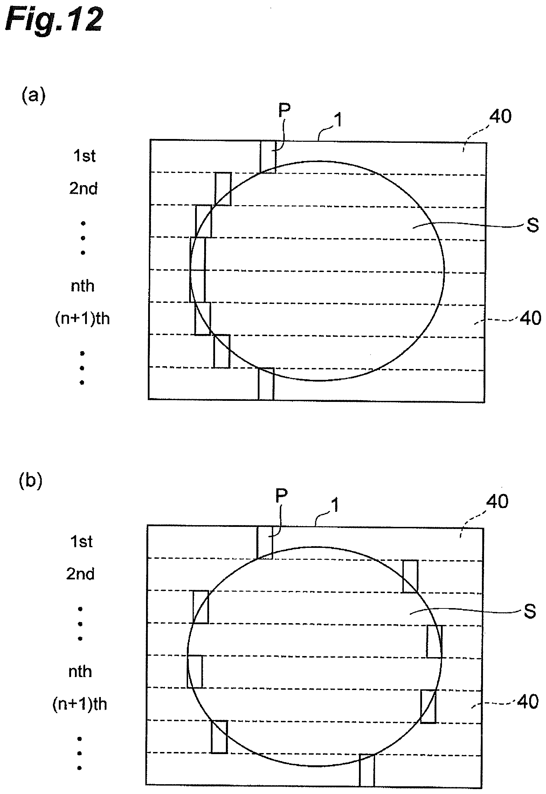

The focus control portion 34 executes the pre-focus process at the sample start position of each segmented region 40. Fig. 12 shows the sample start positions P of the respective segmented regions 40 (regions indicated by rectangles). (a) of Fig. 12 and (b) of Fig. 12 show the sample start positions P of the respective segmented regions 40 in the cases where the scanning is performed in the scanning directions shown in (a) of Fig. 10 and (b) of Fig. 10, respectively.

The focus control portion 34 specifies the sample start positions P, for example, based on the macro image captured by the macro image capturing device M1. Specifically, the macro image acquired by the macro image capturing device M1 is binarized using a predetermined threshold and a range (existing region) where the sample S exists is extracted from the macro image by an automatic setting using a predetermined program or by a manual setting by an operator to the macro image displayed on the monitor 32. The focus control portion 34 specifies a region where each segmented region 40 overlaps with the existing region of the sample S extracted from the macro image, thereby specifying the sample start position P of each segmented region 40.

The focus control portion 34 executes a special pre-focus process for the sample start position P of the segmented region 40 first scanned by the stage control portion 37 (first segmented region 40), different from that for the second and subsequent segmented regions 40. For example, the focus control portion 34, while changing the Z-directional position of the objective lens 15, measures a contrast value of the first image output from the first imaging device 18 at each position, specifies a position where the contrast value is maximum

(in-focus position), and moves the objective lens 15 to the in-focus position.

During the scanning of the segmented region 40 by the stage control portion 37, the focus control portion 34 performs the foregoing control of focus position and, acquires and stores heights of the objective lens 15 from the stage 1, as the control result of the focus position in imaging by the first imaging device 18 (which will be referred to simply as "focus control result"). The focus control portion 34 acquires the heights (Z-directional positions) of the objective lens 15 measured in real time, for example, by a motor or the like provided for the objective lens 15, thereby acquiring the focus control result. Furthermore, the focus control portion 34 stores the focus control result thus acquired, for example, into a storage device such as a memory and a hard disc provided in the image capturing apparatus M.

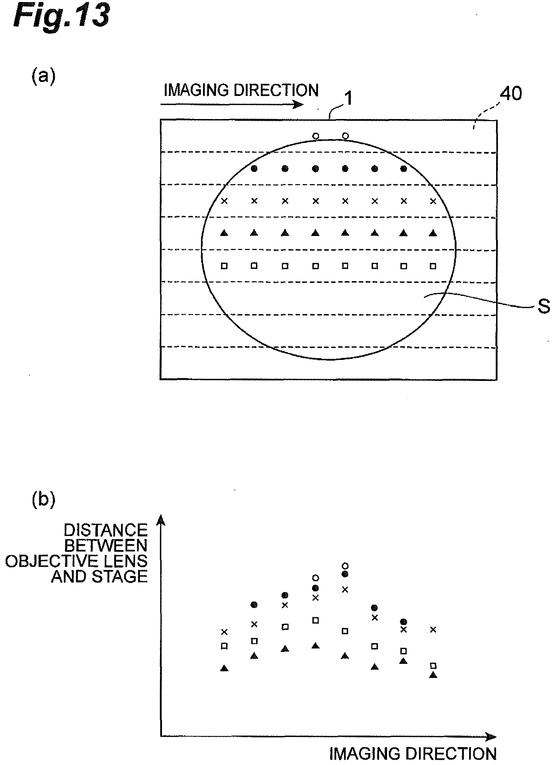

Fig. 13 is a drawing showing an example of the focus control results stored by the focus control portion 34. (a) of Fig. 13 shows positions (e.g., central positions of the imaging field) where the focus control portion 34 stored the focus control result, by different marks for the respective segmented regions 40. (b) of Fig. 13 is a drawing in which the focus control result (relative height of the objective lens 15 to the stage 1) stored by the focus control portion 34 at each of the storing positions in (a) of Fig. 13 is plotted along the imaging direction. As shown in (b) of Fig. 13, the shape of the surface of the sample S (thickness) for each segmented region 40 can be roughly grasped by storing a plurality of focus control results for each of the segmented regions 40.

The focus control portion 34 determines the focus position (initial focus position) in imaging by the first imaging device 18 at the sample start position P of the (n+1)th segmented region 40, based on the focus control result stored during the scanning of the nth (n is an integer of 1 or more) or earlier segmented region 40. For example, the focus control portion 34 determines the initial focus position of the (n+1)th segmented region 40, based on a plane determined by an average, an intermediate value, calculation by the method of least squares, or the like of these focus control results. Thereafter, the focus control portion 34 outputs, to the objective control portion 36, instruction information to drive the objective lens 15 to the thus-determined initial focus position, at the sample start position P of the (n+1)th segmented region 40.

As an example, the following will describe a method for determining the initial focus position of the (n+1)th segmented region 40 by a plane determined by the method of least squares. For example, in Fig. 13, let the imaging direction be the X-direction and a direction perpendicular to the X-direction on the stage 1, be the Y-direction; then, the focus control portion 34 can determine a formula "z = a + b×x + c×y (a, b, and c are predetermined parameters)" to specify X, Y, and Z coordinates (x, y, z) on the plane, by executing the calculation by the method of least squares using a plurality of focus control results stored during the scanning of the nth or earlier segmented region 40. When this operation results in expressing the X and Y coordinates of the sample start position P of the (n+1)th segmented region as (xp, yp), the initial focus position (Z-directional position of the objective lens 15) zp of the (n+1)th segmented region can be obtained as "zp = a + b×xp + cxyp" by the above formula.

It is noted herein that, for determining the initial focus position of the (n+1)th segmented region 40 by the method as described above, the focus control portion 34 may use all the focus control results acquired during the scanning of the nth and earlier segmented regions 40, but it may select the focus control results to be used, as described below.

For example, the focus control portion 34 may determine the initial focus position of the (n+1)th segmented region 40, based on the focus control result stored in the segmented region 40 adjacent to the (n+1)th segmented region 40. Since it is normally presumed that the thickness of the sample S is continuous between neighboring segmented regions 40, we can expect that the initial focus position can be more accurately determined by use of the focus control result in the adjacent segmented region 40. Furthermore, the focus control portion 34 may determine the initial focus position of the (n+1)th segmented region 40, based on the focus control results stored in a plurality of segmented regions 40 before the (n+1)th segmented region. By this, we can expect that the initial focus position can be more accurately determined by use of the focus control results of the plurality of segmented regions.

It is conceivable, however, that the use of the focus control result stored during the scanning of the adjacent segmented region 40 is not effective, depending upon the type, thickness, shape, or the like of the sample S (e.g., a case where the surface of the sample S has continuous fine unevenness, or the like). In such a case, the device may be configured to use the focus control result stored in the segmented region 40 at a position with a predetermined space to the (n+1)th segmented region 40, instead of the segmented region 40 adjacent to the (n+1)th segmented region 40, depending upon the type of the sample S or the like.

The apparatus may be configured as follows as to a method for selecting the focus control result to be used for determining the initial focus position of the (n+1)th segmented region 40: for example, the image capturing apparatus M preliminarily stores selection methods depending upon types of sample S as setting information and an operator is allowed to select a type of sample S through the monitor 32 to change the selection method. This allows us to appropriately select the initial focus position of the (n+1)th segmented region 40, depending upon the type of the sample S or the like.

The timing of storing the focus control result by the focus control portion 34 may be a predetermined distance interval or a predetermined time interval determined in advance, but it is preferable that the focus control portion 34 be configured to store the focus control result in a period in which the stage control portion 37 scans the existing region of the sample S, based on the macro image. This can eliminate the focus control result in the region where the sample is absent, and thereby determine the initial focus position more accurately. It is noted herein that the existing region of the sample S can be specified by specifying a region where each segmented region 40 overlaps with the existing region of the sample S extracted from the macro image.

The focus control portion 34 preferably stores the focus control result while the objective lens 15 is located in the vicinity of the in-focus position. Namely, the focus control portion 34 preferably stores the focus control result at each scanning position where an absolute value of a difference between a contrast value of an image captured in the first imaging region 22A (front focus) and a contrast value of an image captured in the second imaging region 22B is not more than a predetermined value. This allows the device to select and store the focus control result acquired in the vicinity of the in-focus position and thereby to determine the initial focus position more accurately. The focus control portion 34 may store the focus control result at each scanning position where the contrast value is not less than a predetermined value, based on the result of an analysis on the contrast value of the first image acquired by the first imaging device 18, with the same effect being achieved.

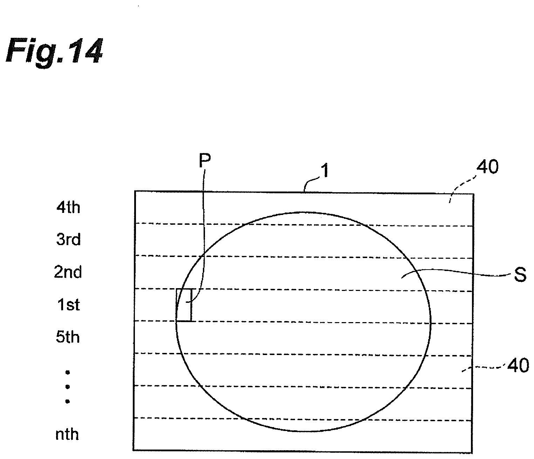

The stage control portion 37 may scan a segmented region 40 where a region occupied by the sample S is maximum as the first segmented region, based on the macro image, as shown in Fig. 14. Here, the region (area) occupied by the sample S in each segmented region 40 can be calculated by specifying a region where the segmented region 40 overlaps with the existing region of the sample S extracted from the macro image, and the segmented region 40 where the region occupied by the sample S is maximum can be specified by comparison among the areas calculated in the respective segmented regions 40.

In the example shown in Fig. 14, the stage control portion 37 implements the scanning of the segmented regions 40 from the segmented region 40 where the region occupied by the sample S is maximum, toward one end of the stage 1 (the first to the fourth). Thereafter, the stage control portion 37 implements the scanning of the segmented regions 40 from the segmented region 40 adjacent to the first-scanned segmented region on the other end side of the stage 1 toward the other end of the stage 1 (the fifth to the nth). By implementing the scanning of the sample S in this order, a larger number of focus control results can be stored during the scanning of the first segmented region 40 than in cases where the scanning is started from the other segmented regions 40. This makes it feasible to more accurately determine the initial focus position in the scanning of the subsequent segmented regions 40. If it is expected that the segmented region 40 whose sample start position P is located nearest in the imaging direction coincides with the segmented region 40 where the area occupied by the sample S is maximum, e.g., as in a case where the shape of the sample S is an approximate ellipse as shown in Fig. 14, the stage control portion 37 may implement the scanning while defining the segmented region 40 whose sample start position P is located nearest in the imaging direction, as the first segmented region 40. In this case, there is no need for performing the calculation and comparison of the areas occupied by the sample S in the respective segmented regions 40.

The operation of the image capturing apparatus M described above will be described below.

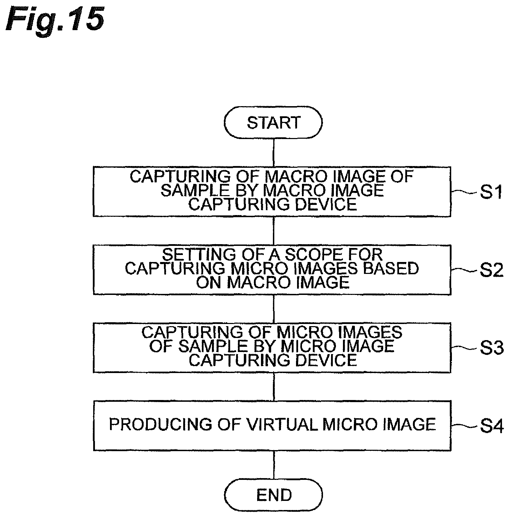

Fig. 15 is a flowchart which shows an operation of the image capturing apparatus M. As shown in the flow chart, at the image capturing apparatus M, at first, a macro image of the sample S is captured by the macro image capturing device M1 (step S1). The captured macro image is binarized by using, for example, a predetermined threshold value and, thereafter, displayed on a monitor 32. A scope for capturing micro images from macro images is set by automatic setting based on a predetermined program or manual setting by an operator (Step S2).

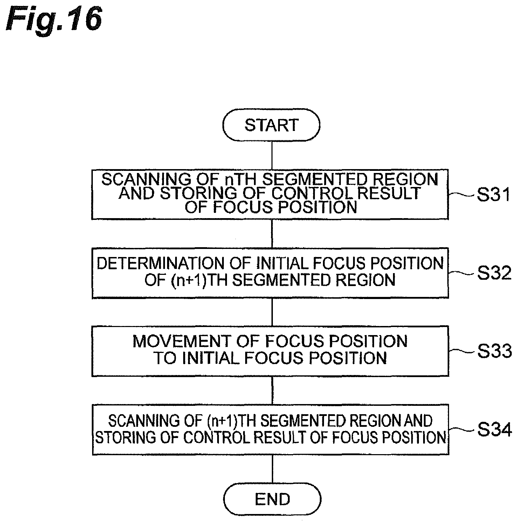

Next, the scanning of the stage 1 is initiated to capture the micro images of the respective segmented regions 40 of the sample S by the micro image capturing device M2 (step S3). The process from a start of scanning of the nth segmented region to scanning of the (n+1)th segmented region in step S3 will be described using Fig. 16. First, the scanning of the stage 1 is started. In capturing of the micro image by the first imaging device 18, the second imaging device 20 analyzes the deviation direction of the objective lens 15 with respect to the sample S, based on the difference between the contrast value of front focus and the contrast value of rear focus by the first imaging region 22A and the second imaging region 22B, and adjustment of position of the objective lens 15 is carried out in real time. In conjunction therewith, the focus control result during the scanning of the segmented region 40 is stored (step S31).

Subsequently, the initial focus position in the scanning of the (n+1)th segmented region 40 is determined based on the focus control result stored during the scanning of the nth (an initial value of n is 1) or earlier segmented region 40 (step S32). Thereafter, the position of the objective lens 15 is moved to the determined initial focus position (step S33) and the same process as step S31 is carried out for the (n+1)th segmented region 40 (step S34). After completion of capturing the micro images for all the segmented regions 40, the captured micro images are synthesized to produce a virtual micro image (step S4).

As described above, the image capturing apparatus M is configured to store the control result of the focus position during the scanning of the segmented regions 40 and determine the initial focus position in the scanning of the (n+1)th segmented region, based on the control result stored during the scanning of the nth (n is an integer of 1 or more) or earlier segmented region 40. The foregoing technique enables this image capturing apparatus M to roughly determine the initial focus position in the next-scanned segmented region by making use of the focus control result of the segmented region 40 the scanning of which has been already completed. This can suppress the increase in processing time necessary for imaging, by simplification of the pre-focus.

The above-described embodiment showed the device for producing the virtual micro images by way of illustration, but it should be noted that the image capturing apparatus according to the present invention can be applied to a variety of devices as long as they are apparatuses as defined with claim 1.

### Reference Signs List

1 stage; 12 light source; 14 light guiding optical system; 15 objective lens; 16 beam splitter (light dividing unit); 18 first imaging device (first imaging unit); 20 second imaging device (second imaging unit); 20a imaging area; 21 (21A) optical-path-difference producing member; 22A first imaging region; 22B second imaging region; 34 focus control portion (focus control unit); 35 region control portion (region control unit); 36 objective lens control portion; L1 first optical path; L2 second optical path; M image capturing apparatus; M1 macro image capturing device; M2 micro image capturing device; S sample.

## Claims

1. An image capturing apparatus (M) comprising:
a stage (1) for supporting a sample;
a light source (12) for outputting light;
a light guiding optical system (14) including a light dividing unit (16) for dividing an optical image of the sample into a first image for capturing an image and a second image for focus control;
a first imaging unit (18) for capturing the first image;
a second imaging unit (20) for capturing the second image;
a scan control unit (37) for implementing a scan of a plurality of preset segmented scanning regions (40) by moving an imaging position of the sample captured by the first imaging unit (18) and the second imaging unit (20) along the plurality of the segmented scanning regions (40); and
a focus control unit (34) for analyzing the captured second image so as to control a focus position of the image pickup by the first imaging unit (18) based on the analysis result,
wherein the focus control unit (34) is configured to store the control result of the focus position while the scan control unit (37) scans the segmented scanning regions (40), and the focus control unit (34) is configured to determine an initial focus position for the scan control unit (37) to scan the (n+1)th segmented scanning region, based on the focus control result stored
during the scanning of the nth or an earlier scanned segmented scanning region by the scan control unit (37), wherein n is an integer of 1 or more, and the focus control unit (34) is configured to analyze the captured second image for the (n+1)th segmented scanning region so as to control a focus position of the image pickup for the (n+1)th segmented scanning region by the first imaging unit (18) based on the analysis result.

2. The image capturing apparatus (M) according to claim 1, wherein the focus control unit (34) is configured to determine the initial focus position for the scan control unit (37) to scan the (n+1)th segmented scanning region, based on the control result stored during the scanning of the segmented scanning region adjacent to the (n+1)th segmented scanning region.

3. The image capturing apparatus (M) according to claim 1, wherein the focus control unit (34) is configured to determine the initial focus position for the scan control unit (37) to scan the (n+1)th segmented scanning region, based on the control results stored during the scanning of a plurality of segmented scanning regions (40) before the (n+1)th segmented scanning region.

4. The image capturing apparatus (M) according to any one of claims 1 to 3, further comprising:
a region control unit (35) for setting at an imaging area of the second imaging unit (20) a first imaging region and a second imaging region for capturing a partial image of the second optical image; and
an optical-path-difference producing member (21, 21A) which is disposed on the second optical path and for giving an optical path difference to the second optical image along an in-plane direction of the imaging area,
wherein the focus control unit (34) is configured to store the control result of the focus position at a scanning position where an absolute value of a difference between a contrast value of an image captured in the first imaging region and a contrast value of an image captured in the second imaging region is not more than a predetermined value.

5. The image capturing apparatus (M) according to any one of claims 1 to 4, further comprising:
a macro image capturing unit for capturing a macro image including the entire sample,
wherein the focus control unit (34) is configured to store the control result of the focus position in a period in which the scan control unit (37) scans a region where the sample exists, based on the macro image.

6. The image capturing apparatus (M) according to any one of claims 1 to 5, further comprising:
a macro image capturing unit for capturing a macro image including the entire sample,
wherein the scan control unit (37) is configured to scan a segmented scanning region where a region occupied by the sample is maximum as the first segmented scanning region based on the macro image.

7. A focusing method comprising:
dividing an optical image of a sample supported on a stage (1) into a first image for capturing an image and a second image for focus control;
capturing the first image by a first imaging unit;
capturing the second image by a second imaging unit (20) ;
implementing a scan of a plurality of preset segmented scanning regions (40)by moving an imaging position of the sample along a plurality of preset segmented scanning regions (40); and
analyzing the captured second image so as to control a focus position of the image pickup by the first imaging unit (18) based on the analysis result,
storing the control result of the focus position while scanning the segmented scanning regions (40); and
determining an initial focus position for a scanning of the (n+1)th scanning region, based on the control result stored during the scanning of the nth or an earlier scanned segmented scanning region by the scan control unit (37), wherein n is an integer of 1 or more,
and analyzing the captured second image for the (n+1)th segmented scanning region so as to control a focus position for the (n+1)th scanning region of the image pickup by the first imaging unit (18) based on the analysis result.

8. The focusing method according to claim 7, wherein the initial focus position for the scanning the (n+1)th segmented scanning region is determined based on the control result stored during the scanning of the segmented scanning region adjacent to the (n+1)th segmented scanning region.

9. The focusing method of the image capturing apparatus (M) according to claim 7, wherein the initial focus position for the scanning the (n+1)th segmented scanning region is determined based on the control results stored during the scanning of a plurality of segmented scanning regions (40) before the (n+1)th segmented scanning region.

10. The focusing method according to any one of claims 7 to 9, further comprising:
setting at an imaging area of the second imaging unit (20) a first imaging region and a second imaging region for capturing a partial image of the second optical image; and
by an optical-path-difference producing member (21, 21A) which is disposed on the second optical path, giving an optical path difference to the second optical image along an in-plane direction of the imaging area,
wherein the control result of the focus position is stored at a scanning position where an absolute value of a difference between a contrast value of an image captured in the first imaging region and a contrast value of an image captured in the second imaging region is not more than a predetermined value.

11. The focusing method according to any one of claims 7 to 10,
further comprising:
by a macro image capturing unit, capturing a macro image including the entire sample, and
storing the control result of the focus position in a period in scanning a region where the sample exists, based on the macro image.

12. The focusing method according to any one of claims 7 to 11, further comprising:
by a macro image capturing unit, capturing a macro image including the entire sample, and
determining a segmented scanning region where a region occupied by the sample is maximum as the first scanning region.

## Patentansprüche

1. Bilderfassungseinrichtung (M), umfassend:
eine Plattform (1) zum Halten einer Probe;
eine Lichtquelle (12) zum Ausgeben von Licht;
ein optisches Lichtleitersystem (14), das eine Lichtteilereinheit (16) beinhaltet, um ein optisches Bild der Probe in ein erstes Bild zum Erfassen eines Bildes und ein zweites Bild zur Fokussteuerung zu teilen;
eine erste Abbildungseinheit (18) zum Erfassen des ersten Bildes;
eine zweite Abbildungseinheit (20) zum Erfassen des zweiten Bildes;
eine Abtaststeuereinheit (37) zum Implementieren einer Abtastung einer Vielzahl von vorab eingestellten segmentierten Abtastregionen (40), indem eine Abbildungsposition der Probe, die durch die erste Abbildungseinheit (18) und die zweite Abbildungseinheit (20) erfasst wird, entlang der Vielzahl der segmentierten Abtastregionen (40) bewegt wird; und
eine Fokussteuereinheit (34) zum Analysieren des erfassten zweiten Bildes, um so eine Fokusposition des Bildes, das durch die erste Abbildungseinheit (18) erfasst wird, auf Basis des Analyseergebnisses zu steuern,
wobei die Fokussteuereinheit (34) konfiguriert ist, das Steuerergebnis der Fokusposition zu speichern, während die Abtaststeuereinheit (37) die segmentierten Abtastregionen (40) abtastet, und die Fokussteuereinheit (34) konfiguriert ist, eine anfängliche Fokusposition für die Abtaststeuereinheit (37) auf Basis des Fokussteuerergebnisses zu bestimmen, das während der Abtastung der n-ten oder einer früheren, von der Abtaststeuereinheit (37) abgetasteten segmentierten Abtastregion gespeichert wurde, um die (n+1)-te segmentierte Abtastregion abzutasten, wobei n eine ganze Zahl von 1 oder mehr ist,
und die Fokussteuereinheit (34) konfiguriert ist, das erfasste zweite Bild für die (n+1)-te segmentierte Abtastregion zu analysieren, um so eine Fokusposition der Bildaufnahme für die (n+1)-te segmentierte Abtastregion durch die erste Abbildungseinheit (18) auf Basis des Analysenergebnisses zu steuern.

2. Bilderfassungseinrichtung (M) nach Anspruch 1, wobei die Fokussteuereinheit (34) konfiguriert ist, die anfängliche Fokusposition für die Abtaststeuereinheit (37), um die (n+1)-te segmentierte Abtastregion abzutasten, auf Basis des Steuerergebnisses zu bestimmen, das während der Abtastung der segmentierten Abtastregion neben der (n+1)-ten segmentierten Abtastregion gespeichert wurde.

3. Bilderfassungseinrichtung (M) nach Anspruch 1, wobei die Fokussteuereinheit (34) konfiguriert ist, die anfängliche Fokusposition für die Abtaststeuereinheit (37), um die (n+1)-te segmentierte Abtastregion abzutasten, auf Basis der Steuerergebnisse zu bestimmen, die während der Abtastung einer Vielzahl von segmentierten Abtastregionen (40) vor der (n+1)-ten segmentierten Abtastregion gespeichert wurden.

4. Bilderfassungseinrichtung (M) nach einem der Ansprüche 1 bis 3, weiter umfassend:
eine Regionssteuereinheit (35) zum Einstellen einer ersten Abbildungsregion und einer zweiten Abbildungsregion zum Erfassen eines Teilbildes des zweiten optischen Bildes bei einem Abbildungsbereich der zweiten Abbildungseinheit (20); und
ein Strahlengang-Differenzerzeugungselement (21, 21A), das an dem zweiten Strahlengang angeordnet ist und dazu dient, dem zweiten optischen Bild entlang einer innerhalb einer Ebene liegenden Richtung des Abbildungsbereichs eine Strahlengangdifferenz zu verleihen,
wobei die Fokussteuereinheit (34) konfiguriert ist, das Steuerergebnis der Fokusposition an einer Abtastposition zu speichern, wo ein Absolutwert einer Differenz zwischen einem Kontrastwert eines Bildes, das in der ersten Abbildungsregion erfasst wird, und einem Kontrastwert eines Bildes, das in der zweiten Abbildungsregion erfasst wird, nicht mehr als ein vorbestimmter Wert ist.

5. Bilderfassungseinrichtung (M) nach einem der Ansprüche 1 bis 4, weiter umfassend:
eine Makrobilderfasssungseinheit zum Erfassen eines Makrobildes, das die gesamte Probe beinhaltet,
wobei die Fokussteuereinheit (34) konfiguriert ist, das Steuerergebnis der Fokusposition in einer Periode, in der die Abtaststeuereinheit (37) eine Region abtastet, in der die Probe vorhanden ist, basierend auf dem Makrobild zu speichern.

6. Bilderfassungseinrichtung (M) nach einem der Ansprüche 1 bis 5, weiter umfassend:
eine Makrobilderfassungseinheit zum Erfassen eines Makrobildes, das die gesamte Probe beinhaltet,
wobei die Abtaststeuereinheit (37) konfiguriert ist, eine segmentierte Abtastregion, wo eine Region, die von der Probe belegt ist, maximal ist, als die erste segmentierte Abtastregion basierend auf dem Makrobild abzutasten.

7. Fokussierverfahren, umfassend:
Teilen eines optischen Bildes einer Probe, die auf einer Plattform (1) gehalten wird, in ein erstes Bild zum Erfassen eines Bildes und ein zweites Bild zur Fokussteuerung;
Erfassen des ersten Bildes durch eine erste Abbildungseinheit;
Erfassen des zweiten Bildes durch eine zweite Abbildungseinheit (20);
Implementieren einer Abtastung einer Vielzahl von vorab eingestellten segmentierten Abtastregionen (40), indem eine Abbildungsposition der Probe entlang einer Vielzahl vorab eingestellter segmentierter Abtastregionen (40) bewegt wird; und
Analysieren des erfassten zweiten Bildes, um so eine Fokusposition der Bildaufnahme durch die erste Abbildungseinheit (18) auf Basis des Analyseergebnisses zu steuern,
Speichern des Steuerergebnisses der Fokusposition, während die segmentierten Abtastregionen (40) abgetastet werden; und
Bestimmen einer anfänglichen Fokusposition für eine Abtastung der (n+1)-ten Abtastregion auf Basis des Steuerergebnisses, das während der Abtastung der n-ten oder einer früheren, durch die Abtaststeuereinheit (37) abgetasteten segmentierten Abtastregion gespeichert wurde, wobei n eine ganze Zahl von 1 oder mehr ist,
und Analysieren des erfassten zweiten Bildes für die (n+1)-te segmentierte Abtastregion, um so eine Fokusposition für die (n+1)-te Abtastregion der Bildaufnahme durch die erste Abbildungseinheit (18) auf Basis des Analysenergebnisses zu steuern.

8. Fokussierverfahren nach Anspruch 7, wobei die anfängliche Fokusposition für die Abtastung der (n+1)-ten segmentierten Abtastregion auf Basis des Steuerergebnisses bestimmt wird, das während der Abtastung der segmentierten Abtastregion neben der (n+1)-ten segmentierten Abtastregion gespeichert wurde.

9. Fokussierverfahren der Bilderfassungseinrichtung (M) nach Anspruch 7, wobei die anfängliche Fokusposition für die Abtastung der (n+1)-ten segmentierten Abtastregion auf Basis der Steuerergebnisse bestimmt wird, die während der Abtastung einer Vielzahl von segmentierten Abtastregionen (40) vor der (n+1)-ten segmentierten Abtastregion gespeichert wurden.

10. Fokussierverfahren nach einem der Ansprüche 7 bis 9, weiter umfassend:
Einstellen einer ersten Abbildungsregion und einer zweiten Abbildungsregion zum Aufnehmen eines Teilbildes des zweiten optischen Bildes bei einem Abbildungsbereich der zweiten Abbildungseinheit (20); und
durch ein Strahlengang-Differenzerzeugungselement (21, 21A), das an dem zweiten Strahlengang angeordnet ist, Verleihen einer Strahlengangdifferenz dem zweiten optischen Bild entlang einer innerhalb einer Ebene liegenden Richtung des Abbildungsbereichs,
wobei das Steuerergebnis der Fokusposition an einer Abtastposition gespeichert wird, wo ein Absolutwert einer Differenz zwischen einem Kontrastwert eines Bildes, das in der ersten Abbildungsregion erfasst wird, und einem Kontrastwert eines Bildes, das in der zweiten Abbildungsregion erfasst wird, nicht mehr als ein vorbestimmter Wert ist.

11. Fokussierverfahren nach einem der Ansprüche 7 bis 10, weiter umfassend:
durch eine Makrobildaufnahmeeinheit, Erfassen eines Makrobildes, das die gesamte Probe beinhaltet, und
Speichern des Steuerergebnisses der Fokusposition in einer Periode, in der Abtastung einer Region erfolgt, in der die Probe vorhanden ist, basierend auf dem Makrobild.

12. Fokussierverfahren nach einem der Ansprüche 7 bis 11, weiter umfassend:
durch eine Makrobildaufnahmeeinheit, Erfassen eines Makrobildes, das die gesamte Probe beinhaltet, und
Bestimmen einer segmentierten Abtastregion, wo eine Region, die von der Probe belegt ist, maximal ist, als die erste segmentierte Abtastregion.

## Revendications

1. Appareil de capture d'images (M) comprenant :
une platine (1) pour supporter un échantillon ;
une source de lumière (12) pour émettre de la lumière ;
un système optique de guidage de lumière (14) incluant une unité de division de lumière (16) pour diviser une image optique de l'échantillon en une première image pour capturer une image et une seconde image pour une commande de mise au point ;
une première unité d'imagerie (18) pour capturer la première image ;
une seconde unité d'imagerie (20) pour capturer la seconde image ;
une unité de commande de balayage (37) pour mettre en œuvre un balayage d'une pluralité de régions de balayage segmentées prédéfinies (40) en déplaçant une position d'imagerie de l'échantillon capturé par la première unité d'imagerie (18) et la seconde unité d'imagerie (20) le long de la pluralité des régions de balayage segmentées (40) ; et
une unité de commande de mise au point (34) pour analyser la seconde image capturée afin de commander une position de mise au point de l'image prise par la première unité d'imagerie (18) sur la base du résultat d'analyse,
dans lequel l'unité de commande de mise au point (34) est configurée pour stocker le résultat de commande de la position de mise au point tandis que l'unité de commande de balayage (37) balaye les régions de balayage segmentées (40), et l'unité de commande de mise au point (34) est configurée pour déterminer une position de mise au point initiale pour l'unité de commande de balayage (37) pour balayage de la (n + 1)ème région segmentée, sur la base du résultat de commande de mise au point stocké pendant le balayage de la nième ou d'une région de balayage segmentée balayée plus tôt par l'unité de commande de balayage (37), dans lequel n est un entier de 1 ou plus, et l'unité de commande de mise au point (34) est configurée pour analyser la seconde image capturée pour la (n + 1)ème région de balayage segmentée de manière à commander une position de mise au point de l'image prise pour la (n + 1)ème région de balayage segmentée par la première unité d'imagerie (18) sur la base du résultat d'analyse.

2. Appareil de capture d'images (M) selon la revendication 1, dans lequel l'unité de commande de mise au point (34) est configurée pour déterminer la position de mise au point initiale pour l'unité de commande de balayage (37) pour balayage de la (n + 1)ème région de balayage segmentée, sur la base du résultat de commande stocké pendant le balayage de la région de balayage segmentée adjacente à la (n + 1)ème région de balayage segmentée.

3. Appareil de capture d'images (M) selon la revendication 1, dans lequel l'unité de commande de mise au point (34) est configurée pour déterminer la position de mise au point initiale pour l'unité de commande de balayage (37) pour balayage de la (n + 1)ème région de balayage segmentée, sur la base des résultats de commande stockés pendant le balayage d'une pluralité de régions de balayage segmentées (40) avant la (n + 1)ème région de balayage segmentée.

4. Appareil de capture d'images (M) selon l'une quelconque des revendications 1 à 3, comprenant en outre :
une unité de commande de région (35) pour définir dans une zone d'imagerie de la seconde unité d'imagerie (20) une première région d'imagerie et une seconde région d'imagerie pour capturer une image partielle de la seconde image optique ; et
un élément de production de différence de trajet optique (21, 21A) qui est disposé sur le second trajet optique et pour donner une différence de trajet optique à la seconde image optique le long d'une direction dans le plan de la zone d'imagerie,
dans lequel l'unité de commande de mise au point (34) est configurée pour stocker le résultat de commande de la position de mise au point dans une position de balayage où une valeur absolue d'une différence entre une valeur de contraste d'une image capturée dans la première région d'imagerie et une valeur de contraste d'une image capturée dans la seconde région d'imagerie n'est pas supérieure à une valeur prédéterminée.

5. Appareil de capture d'images (M) selon l'une quelconque des revendications 1 à 4, comprenant en outre :
une unité de capture de macro-image pour capturer une macro-image incluant l'échantillon entier,
dans lequel l'unité de commande de mise au point (34) est configurée pour stocker le résultat de commande de la position de mise au point dans une période pendant laquelle l'unité de commande de balayage (37) balaye une région où l'échantillon existe, sur la base de la macro-image.

6. Appareil de capture d'images (M) selon l'une quelconque des revendications 1 à 5, comprenant en outre :
une unité de capture de macro-image pour capturer une macro-image incluant l'échantillon entier,
dans lequel l'unité de commande de balayage (37) est configurée pour balayer une région de balayage segmentée où une région occupée par l'échantillon est maximale en tant que première région de balayage segmentée sur la base de la macro-image.

7. Procédé de mise au point comprenant les étapes consistant à :
diviser une image optique d'un échantillon supporté sur une platine (1) en une première image pour capturer une image et une seconde image pour une commande de mise au point;
capturer la première image par une première unité d'imagerie ;
capturer la seconde image par une seconde unité d'imagerie (20) ;
mettre en œuvre un balayage d'une pluralité de régions de balayage segmentées prédéfinies (40) en déplaçant une position d'imagerie de l'échantillon le long d'une pluralité de régions de balayage segmentées prédéfinies (40) ; et
analyser la seconde image capturée afin de commander une position de mise au point de l'image prise par la première unité d'imagerie (18) sur la base du résultat d'analyse,
stocker le résultat de commande de la position de mise au point tout en balayant les régions de balayage segmentées (40) ; et
déterminer une position initiale de mise au point pour un balayage de la (n + 1)ème région de balayage, sur la base du résultat de commande stocké pendant le balayage de la nième ou d'une région de balayage segmentée balayée plus tôt par l'unité de commande de balayage (37), dans lequel n est un entier de 1 ou plus, et analyser la seconde image capturée pour la (n + 1)ème région de balayage segmentée de manière à commander une position de mise au point pour la (n + 1)ème région de balayage de l'image prise par la première unité d'imagerie (18) sur la base du résultat d'analyse.

8. Procédé de mise au point selon la revendication 7, dans lequel la position de mise au point initiale pour le balayage de la (n + 1)ème région de balayage segmentée est déterminée sur la base du résultat de commande stocké pendant le balayage de la région de balayage segmentée adjacente à la (n + 1)ème région de balayage segmentée.

9. Procédé de mise au point de l'appareil de capture d'images (M) selon la revendication 7, dans lequel la position de mise au point initiale pour le balayage de la (n + 1)ème région de balayage segmentée est déterminée sur la base des résultats de commande stockés pendant le balayage d'une pluralité de régions de balayage segmentées (40) avant la (n + 1)ème région de balayage segmentée.

10. Procédé de mise au point selon l'une quelconque des revendications 7 à 9, comprenant en outre les étapes consistant à :
définir dans une zone d'imagerie de la seconde unité d'imagerie (20) une première région d'imagerie et une seconde région d'imagerie pour capturer une image partielle de la seconde image optique ; et
par l'intermédiaire d'un élément de production de différence de trajet optique (21, 21A) qui est disposé sur le second trajet optique, donner une différence de trajet optique à la seconde image optique le long d'une direction dans le plan de la zone d'imagerie,
dans lequel le résultat de commande de la position de mise au point est stocké dans une position de balayage où une valeur absolue d'une différence entre une valeur de contraste d'une image capturée dans la première région d'imagerie et une valeur de contraste d'une image capturée dans la seconde région d'imagerie n'est pas supérieure à une valeur prédéterminée.

11. Procédé de mise au point selon l'une quelconque des revendications 7 à 10, comprenant en outre :
par une unité de capture de macro-image, une capture d'une macro-image incluant l'échantillon entier, et
un stockage du résultat de commande de la position de mise au point pendant une période de balayage d'une région où l'échantillon existe, sur la base de la macro-image.

12. Procédé de mise au point selon l'une quelconque des revendications 7 à 11, comprenant en outre :
par l'intermédiaire d'une unité de capture de macro-image, une capture d'une macro-image incluant l'échantillon entier, et
une détermination d'une région de balayage segmentée où une région occupée par l'échantillon est maximale en tant que première région de balayage.
